# EUROPEAN PATENT SPECIFICATION

(11) **EP 3 274 195 B1**
(45) Date of publication and mention of the grant of the patent: **10.03.2021**
(21) Application number: 16712185.4
(22) Date of filing: 23.03.2016
(51) Int. Cl.: B60G 11/54, F16F 1/12, F16F 3/04, B60G 15/04

(54) **SPRING AND DAMPER SYSTEMS FOR ATTENUATING THE TRANSMISSION OF ENERGY**
FEDER- UND DÄMPFERSYSTEME ZUR DÄMPFUNG DER ÜBERTRAGUNG VON ENERGIE
SYSTÈMES À RESSORT ET AMORTISSEUR PERMETTANT D'ATTÉNUER LA TRANSMISSION D'ÉNERGIE

(30) Priority: 23.03.2015 US 201514666066
(43) Date of publication of application: 31.01.2018
(73) Proprietor: Renton Coil Spring Company, Renton, WA 98057 (US)
(72) Inventor: PEPKA, Charles, F., Renton, WA 98057 (US)
(74) Representative: Ström & Gulliksson AB
(86) International application number: PCT/US2016/023831
(87) International publication number: WO 2016/154351

(56) References cited:
- DE-A1-102004 031 867
- DE-B- 1 127 671
- DE-U- 1 713 815
- DE-U- 1 908 903
- FR-A- 1 255 804
- FR-A- 1 476 682
- US-A- 2 044 649
- US-A- 3 178 036
- US-A- 4 712 778

## Description

### TECHNICAL FIELD

The present invention concerns vibration attenuation and vibration energy damping.

The invention relates to attenuating the vibration of components or systems. The invention relates more particularly to systems for attenuating and damping the transmission of an input signal and/or input energy.

### BACKGROUND

Springs provide a restoring force when mechanical work elastically deforms the shape of the spring. The restoring force is directed along a direction that would tend to restore the spring to its relaxed or non-deformed shape or state. Accordingly, springs are often employed in applications that require biasing or restoring the position of an element or structure to a position that corresponds to the spring's relaxed state.

The restoring force is a result of the spring's elastic properties. Namely, when elastically deformed, the spring stores at least a portion of the energy associated with the deforming mechanical work. This mechanical potential provides the restoring force. Springs release the stored potential energy in the form of mechanical work via the restoring force, often resulting in oscillatory motion. Some springs store energy by an elastic elongation/stretching and/or shortening/compression along a longitudinal axis of the spring, such as the case with helical or coil springs.

Within a range of displacement or deformation away from the relaxed state, the magnitude of the restoring force of many springs is approximately linearly proportional with the displacement. Furthermore, the restoring force is directed in the opposite direction of the displacement. Within the linear range of displacement, the restoring force may be modeled by employing Hooke's law. At least to first order, the kinematics of such springs are adequately approximated as harmonic or sinusoidal motion.

When coupled to other structures or elements, harmonic oscillators, such as springs, transmit at least a portion of the vibrational or oscillatory energy to the other structures. Harmonic oscillators and systems comprised of harmonic oscillators resonate at defined resonant frequencies that depend upon properties of the oscillators and the systems. Thus, when a spring is driven at or near a resonant frequency, the transmitted energy may be amplified, causing damage and/or catastrophic failure of the oscillator or the other structures that are receiving the transmitted vibrational energy.

For an oscillating system driven by an energy-carrying signal, the transmissibility of the system is defined as the ratio of the input energy to the transmitted output energy. Because the frequency of the input signal may vary, the transmissibility is often a function of the signal's frequency. Energy-dissipating elements, such as dampers, are often coupled to oscillators to dissipate vibrational energy and decrease the transmissibility of the system. When a damper is coupled to a spring, at least a portion of the energy stored in the spring is transmitted to the damper and dissipated over a time scale much longer than the period of the frequency of the system. Accordingly, the oscillatory motion is at least partially attenuated and/or damped.

However, design requirements of systems and assemblies often constrain the physical placement and types of damping elements that may be employed in various applications. Furthermore, coupling the damping or damper element to the spring may present further engineering challenges. When systems that include a plurality of oscillators require damping, the complexity of the engineering challenges is multiplied. It is for these and other considerations that the following disclosure is provided. Examples of background are disclosed for instance in US2044649A and FR1476682A. The document FR1476682A discloses a vibration attenuating system with a damping element, which provides uniform damping for each coil of the helical spring when an input signal is provided to the helical spring.

### SUMMARY

Subject to the present invention is a vibration attenuation system for attenuating a transmission of an input signal in accordance with the appended independent claim 1; preferred embodiment being defined in the dependent claims 2-10. In an aspect, the system includes a helical spring, a first terminal, and a first damping element. The helical spring includes a plurality of helical coils, a first end, and a second end. The plurality of helical coils define an inner volume of the helical spring intermediate the first and second ends. The first terminal includes a first inner member. The first terminal is coupled to the first end of the helical spring. The first inner member extends into the inner volume of the helical spring. The first damping element is positioned on the first inner member. The first damping element is within the inner volume of the helical spring. When the input signal is provided to the helical spring, the first damping element engages at least one of the plurality of helical coils and attenuates the transmission of at least a portion of the input signal.

In preferred embodiments, the damping element is a toroidal damping element. The toroidal damping element is topologically equivalent to a torus. The toroidal damping element is positioned on the first inner member. A receiving aperture or hole in the toroidal damping element receives the first inner member. The inner member includes a recessed portion. The first damping element is positioned on the recessed portion of the first inner member. The first member includes a shaft. At least a portion of the shaft is a hollow shaft.

The first terminal includes a helical groove. The helical groove engages with at least a helical coil adjacent to the first end of the helical spring to couple the first terminal to the spring. The first terminal includes a portion that is external to the inner volume of the helical spring. The external portion may include a mounting aperture. In at least one embodiment, when the helical spring is in a first state, such that the helical spring is storing a first amount of energy, the first damping element does not engage with the plurality of helical coils. When the helical spring is in a second state, such that the helical spring is storing a second amount of energy and the second amount of energy is greater than the first amount of energy the, the first damping element engages with the plurality of helical coils.

In some embodiments, the engagement between the first damping element and the at least one of the plurality of helical coils includes at least a frictional engagement between the first damping element and the at least one of the plurality of coils. The engagement between the first damping element and the at least one of the plurality of helical coils includes a compressive force on the first damping element.

The plurality of coils includes a first helical coil and a second helical coil. A distance between the first coil and the first end is greater than a distance between the second coil and the first end. When the input signal is provided to the helical spring, a magnitude of a first engagement force that is between the first damping element and the first coil is less than a magnitude of a second engagement force that is between the first damping element and the second coil. The first coil includes a first radius, the second coil includes a second radius, and the first radius is greater than the second radius. When the input signal is provided to the helical spring, the first damping element does not engage with the first coil such that the magnitude of the first engagement force is substantially zero.

In various embodiments, the system further includes a second terminal and a second damping element. The second terminal includes a second inner member. The second terminal is coupled to the second end of the helical spring. The second inner member extends into the inner volume of the helical spring. The second damping element is positioned on the second inner member. The second damping element is within the inner volume of the helical spring. When the input signal is provided to the helical spring, the second damping element engages another of the plurality of helical coils and further attenuates the transmission of at least a portion of the input signal. The system may further include a safety leash. A first end of the safety leash is coupled to the first inner member. A second end of the safety leash is coupled to the second inner member.

An energy-dissipating assembly for dissipating an input energy is disclosed herein. The assembly includes an energy-storage device and first energy-dissipating device. The energy-storage device stores at least a portion of energy corresponding to mechanical work provided to the energy-storage device. When energy is stored in the energy-storage device, an internal cavity of the energy-storage device is elastically deformed in response to the provided mechanical work. The first energy-dissipating device dissipates at least a portion of energy corresponding to mechanical work provided to a surface of the first energy-dissipating device. The first dissipating device is positioned within the internal cavity of the storage device. When an amount of input mechanical work that is greater than a work threshold is provided to the energy-storage device, the internal cavity of the energy-storage device is elastically deformed. The energy corresponding to the input mechanical work and stored in the energy-storage device performs mechanical work on the surface of the first energy-dissipating device. At least a portion of the stored energy is dissipated.

In various embodiments, the energy-storage device is a coil spring. The first energy-dissipating device may be an elastomer damping element. The first energy-dissipating device is positioned on a first inner terminal member. When the internal cavity of the energy-storage device is elastically deformed, the first inner terminal member translates along a longitudinal axis of the energy-storage device to provide engagement between the energy-storage device and the first energy-dissipating device. At least a portion of the stored energy is translated into mechanical work on the surface of the first energy-dissipating device.

In at least one embodiment, a frictional engagement between the energy-storage device and the first energy-dissipating device enables the stored energy to perform mechanical work on the surface of the first energy-dissipating device. The mechanical work that is performed on the surface of the first energy-dissipating device is provided by at least a force exerted on the surface of the first energy-dissipating device by the energy-storage device. The force may be a compression force. The force may be a friction force.

In a preferred embodiment, the assembly further includes a second energy-dissipating device. The second energy-dissipating device dissipates at least a portion of energy corresponding to mechanical work provided to a surface of the second energy-dissipating device. The second dissipating device is positioned within the internal cavity of the storage device. When an amount of input mechanical work that is greater than the work threshold is provided to the storage device, the internal cavity of the storage device is elastically deformed. Energy corresponding to the input mechanical work and stored in the energy-storage device performs mechanical work on the surface of the second energy-dissipating device. At least another portion of the stored energy is dissipated. The assembly may further include a leash coupled to the first energy-dissipating device. The leash is configured and arranged to constrain a motion of the first energy-dissipating device during a catastrophic release of energy by the energy-storage device. The first energy-dissipating device is an annular dissipating device.

Subject to the present invention is also a spring and damper system for damping vibrational energy in accordance with the appended independent claim 11; preferred embodiments being defined in dependent claims 12-15. In an aspect, the system includes a first spring, a second spring, and a first damper element. The first spring includes at least a first helical coil and a first longitudinal axis within a first internal volume of the first spring. The second spring includes at least a second helical coil and a second longitudinal axis. The first longitudinal axis and the second longitudinal axis are substantially aligned. The second coil is disposed within the first internal volume of the first spring. The first damper element includes an outer surface, a receiving aperture, and an inner surface of the aperture. The aperture receives at least the second coil of the second spring. The second coil is adjacent to the inner surface. The first coil of the first spring is disposed adjacent to the outer surface. The first coil of the first spring is configured and arranged to engage with the outer surface of the first damper element along a first helical arc subtending an angle of at least 90°. The second coil of the second spring is configured and arranged to engage with the inner surface of the first damper element along a second helical arc subtending an angle of at least 90°.

In a preferred embodiment, the first spring includes a third helical coil. The second spring includes a fourth helical coil that is disposed within the first internal volume of the first spring. The system may further include a second damper element and a third damper element. The second damper element includes a second outer surface, a second receiving aperture, and a second inner surface of the second aperture. The second aperture receives at least the fourth coil of the second spring. The fourth coil is adjacent to the second inner surface. The third coil of the first spring is disposed adjacent to the second outer surface. The third coil of the first spring is configured and arranged to engage with the second outer surface of the second damper element along a third helical arc subtending an angle of at least 90°. The fourth coil of the second spring is configured and arranged to engage with the second inner surface of the second damper element along a fourth helical arc subtending an angle of at least 90°.

The system further includes a first terminal that couples a first end of the first spring to a second end of the second spring. The first terminal includes a first helical groove on an outer surface that engages with at least one helical coil of the first spring and a second helical groove on an inner surface that engages with at least one helical coil of the second spring. The first spring includes a first resonant frequency. The second spring includes a second resonant frequency. The first resonant frequency and the second resonant frequency are dissimilar resonant frequencies. The first spring includes a first spring constant. The second spring includes a second spring constant. The first spring constant and the second spring constant are dissimilar spring constants. At least one of a frictional engagement between the first spring and the first damper element or a frictional engagement between the second spring and the first damper element stabilizes a longitudinal positioning of the first damper element.

A suspension assembly for attenuating a transmission of resonant signals is disclosed herein. The assembly includes a first signal-transmitting device, a second signal-transmitting device, and a first signal-attenuating device. The second signal-transmitting device is arranged in parallel with the first signal-transmitting device. The first signal-attenuating device is coupled to both the first signal-transmitting device and the second signal-transmitting device. The first signal-attenuating device is configured and arranged to substantially attenuate both a first signal provided to the first signal-transmitting device and a second signal provided to the second signal-transmitting device.

At least one of the first signal-transmitting device or the second signal-transmitting device is a spring device. The first-signal transmitting device and the second signal-transmitting device are arranged in a coaxial configuration. The first-signal transmitting device, the first signal-attenuating device, and the second signal-transmitting device are arranged in a coaxial configuration. The first signal provided to first signal-transmitting device is a resonant frequency of the first signal-transmitting device. The second signal provided to second signal-transmitting device is a resonant frequency of the second signal-transmitting device. A first impedance of the first signal-transmitting device is dissimilar to a second impedance of the second signal-transmitting device. The first signal-transmitting device is frictionally engaged with an outer surface of the first signal-attenuating device. The second signal-transmitting device is frictionally engaged with an inner surface of the first signal-attenuating device.

### BRIEF DESCRIPTION OF THE DRAWINGS

Preferred and alternative examples of the present invention are described in detail below with reference to the following drawings:
Figure 1A illustrates an embodiment of a vibration attenuation system that includes an energy-storing element, two energy-dissipating elements, and a pair of terminal assemblies. The system is in a relaxed state.
Figure 1B illustrates the vibration attenuation system of Figure 1A in a tensioned state.
Figure 1C is a close-up view of one of the spring ends and terminals of the vibration attenuation system of Figure 1A.
Figure 2A is a cross-sectioned view of the vibration attenuation system of Figure 1A in a relaxed state.
Figure 2B is a cross-sectioned view of the vibration attenuation system of Figure 1B in a tensioned state.
Figure 2C illustrates another embodiment of a vibration attenuation system that includes hollow members. The system is in a tensioned state.
Figure 3A illustrates another embodiment of a vibration attenuation system that includes two energy-storing elements, two energy-dissipating elements that are each common to each of the energy-storing elements, and a pair of terminals.
Figure 3B is a close-up view the vibration attenuation system of Figure 3A that shows a close-up of one of the common energy-dissipating elements.
Figures 4A-4C show various views of one embodiment of an energy-dissipating element.
Figure 5 shows plots of the un-attenuated and the attenuated transmission of an input signal, where the attenuation of the transmitted signal is enabled by various embodiments disclosed herein.

### DETAILED DESCRIPTION OF THE PREFERRED EMBODIMENTS

This disclosure presents systems and methods for coupling structures, while decreasing the energy associated with a signal that is provided to the system and/or transmitted between the structures. To couple the structures, one or more couplers are employed. At least one of the couplers provides a restoring force. In preferred embodiments, when mechanical work displaces or deforms the shape of at least one of the couplers, the deformed coupler provides the restoring force. The restoring forces bias a relative positioning between the structures. Unless the system or the system's environment provides another force, the structures are positioned in the biased relative positioning. At least one of the couplers may be an energy-storing device or element. In embodiments that include a plurality of couplers, the system may include couplers that are arranged in parallel, series, and/or a combination thereof. Examples of couplers include, but are not limited to springs, such as helical or coil springs.

In addition to decreasing the transmission of energy-carrying signals between the structures, when an external element inputs energy into the various systems presented herein, the systems and methods attenuate and/or dissipate at least a portion of the energy input. For instance, energy-dissipating elements may be coupled to at least one of the couplers. Through an energy-transferring engagement between the coupler and the energy-dissipating element, the coupler transmits at least a portion of the inputted energy to the energy-dissipating element. The energy-dissipating element safely dissipates at least a portion of the inputted energy away from the system and over an acceptable time interval. Furthermore, the energy-dissipating element decreases the transmission of energy between the coupled structures. Examples of energy-dissipating elements include, but are not limited to damper and/or damping elements or devices.

One non-limiting application of the various embodiments of systems and methods presented herein include vehicles such as aircraft, spacecraft, and overland vehicle assemblies and sub-assemblies. Although much of the following discussion is in regards to air and spacecraft, it should be understood that the principles and various embodiments disclosed herein may be readily adapted and applied to any vehicle or other assembly and/or system that is acted upon by external forces or energy-carrying signals.

Modern aircraft designs require the coupling of many structures, while simultanously decreasing the transmission of energy between the structures. Additionally, under normal flight conditions, the acceleration/deceleration of the aircraft, as well as the aircraft's velocity through the atmosphere results in a substantial energy transfer or impulse to the various structures included in the aircraft. For example, high velocity translations relative to a turbulent atmosphere may induce oscillatory motion in aircraft components at resonant frequencies. This induced acceleration of the aircraft components may cause the components or couplers linking the components to catastrophically fail or otherwise become damaged. Furthermore, the aircraft design may require a biasing of the relative positioning between some of the coupled structures.

A non-limiting example pertains to aircraft landing gear. Landing gear must be coupled to the fuselage or other structural elements of an aircraft or a spacecraft. Furthermore, to avoid an unacceptable scenario where the landing gear are stuck in an "up" or retracted position, a restoring force may be required to bias the landing gear in a "down," "landing," or otherwise protracted position. After takeoff, a secondary force, provided by hydraulics, pneumatics, or another mechanism, may overcome the restoring force to position the landing gear in the retracted position. When the secondary force is not present, the restoring force biases or restores the landing gear in the protracted position and decreases the likelihood that the landing gear sticks in the retracted position. A spring may be employed to at least partially couple the landing gear to the craft and provide the restoring force to bias the landing gear in the protracted position.

In various embodiments, one or more springs are coupled between the craft and the landing gear. The spring is under tension when the landing gear is in the retracted position. When retracted, the tensioned spring provides a restoring force. When the landing gear is protracted, the spring is relaxed relative to the retracted state. Accordingly, during a substantial portion of a flight, the spring in under tension. At least one damper is coupled to the spring to decrease the transmission of energy between the landing gear and the craft. The damper also dissipates energy supplied to the plane during its translation through a relatively dense atmosphere and the forces associated with the acceleration/declaration of the aircraft during takeoff, flight, and landing. The damper also dampens the transmission of such forces to the landing gear via the tensioned spring. In preferred embodiments, at least one of the dampers is configured to dissipate energy over a range of frequencies that include at least one resonant frequency of the plane's various systems or assemblies. Without such a system, the various couplers and other craft components may become damaged or otherwise catastrophically fail due to the inability to dissipate, attenuate, or otherwise damp forces and/or energy-carrying signals that are inputted to the aircraft during normal operation.

As noted above, the various systems and methods employ one or more energy-dissipating elements, such as dampers, in conjunction with one or more energy-storing couplers, such as helical or coil springs. The damper elements are positioned to contact the sides of a coil spring during motion of the spring. In various embodiments, at least one of the damper elements is "inline" and inside the coil spring. The choice of elastic properties of the material and physical dimensions of the energy-dissipating elements, as well as the total number of energy-dissipating damper elements employed in the configuration or system, tailors the damping amplitude and rebound of the system.

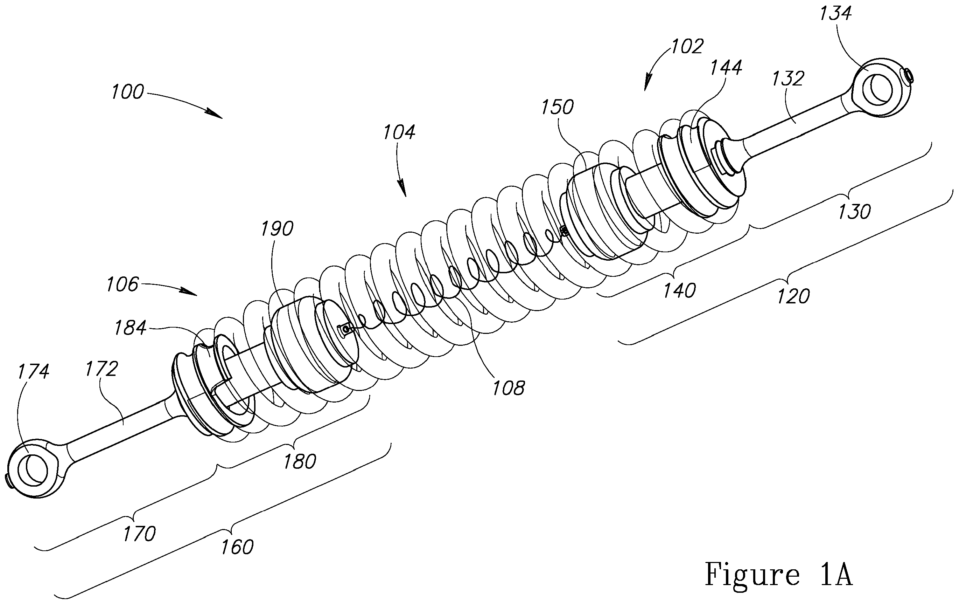

Figure 1A illustrates an embodiment of a vibration attenuation system 100 that includes an energy-storing element 104, two energy-dissipating elements 150/190, and a pair of terminal assemblies 120/160. In various embodiments, system 100 is a spring and damper system. The system 100 may include an energy-dissipating assembly. In Figure 1A, system 100 is shown in a relaxed state. When in a relaxed state, energy-storing element 104 is storing a decreased amount of energy relative to when energy-storing element 104 is under tension or compression. Note in Figure 1A, the energy-storing element 104 is shown as transparent for better understanding and description of the various parts of the configuration.

Energy-storing element 104 may be a spring, such as a helical or a coil spring. As shown in Figure 1A, in some embodiments, spring 104 is a tension spring. In other embodiments, spring 104 is a compression spring. In a preferred embodiment, when relaxed, spring 104 is neither under tension nor under compression. Helical spring 104 includes a plurality of coils terminating at a first spring end 102 and a second spring end 106. In preferred embodiments, the coils are helical coils. The coils of spring 104 define an inner spring volume that is between the first spring end 102 and the second spring end 106 and inside of the coils. Spring 104 includes a longitudinal axis that is coaxial with the longitudinal axis of the spring's inner volume.

A first terminal assembly 120 is coupled to the first spring end 102. First terminal assembly 120 includes a first terminal inner sub-assembly 140 and a first terminal outer sub-assembly 130. As show in Figure 1A, at least a portion of first terminal inner sub-assembly 140 is positioned within the inner spring volume of spring 104. Likewise, at least a portion of first terminal outer sub-assembly 130 is positioned outside of the inner spring volume. First terminal inner sub-assembly 140 and first terminal outer sub-assembly 130 are coupled together to form the first terminal assembly 120.

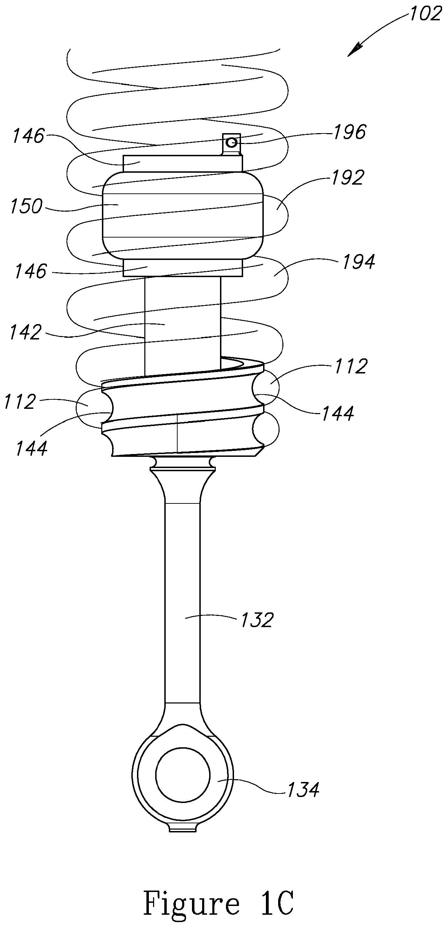

A close-up view of first terminal inner sub-assembly 140 is provided in Figure 1C. The first energy-dissipating element 150 is coupled to an inner shaft included in first terminal inner sub-assembly 140, such as first terminal inner shaft 142 shown in Figure 1C. As such, the first energy-dissipating element 150 is positioned within the inner spring volume of spring 104. The first terminal inner shaft 142 is coaxial with spring's 104 longitudinal axis. The first terminal inner sub-assembly 140 also includes a first set of helical grooves 144. The first set of helical grooves 144 receives at least one of the coils of the first spring end 102 and couples the first terminal assembly 120 to spring 104. In a preferred embodiment, the first terminal assembly 120 is coupled to spring 104 by helical grooves 144 rotatably receiving the most distal coils of the first spring end 102. Such a coupling mechanism is similar to when the threads of a nut receive the corresponding threads of a screw and couple the bolt to the screw.

The first terminal outer assembly 130 includes a first terminal outer shaft 132 and a first terminal mounting aperture 134 or eyelet. At least a portion of the first terminal outer shaft 132 and the first terminal mounting aperture 134 are positioned outside of the inner volume of spring 104. The mounting aperture enables coupling the system 100 to another system, structure, assembly, or the like. The first terminal outer shaft 132 is coaxial with the first terminal inner shaft 142 and the spring's 104 longitudinal axis

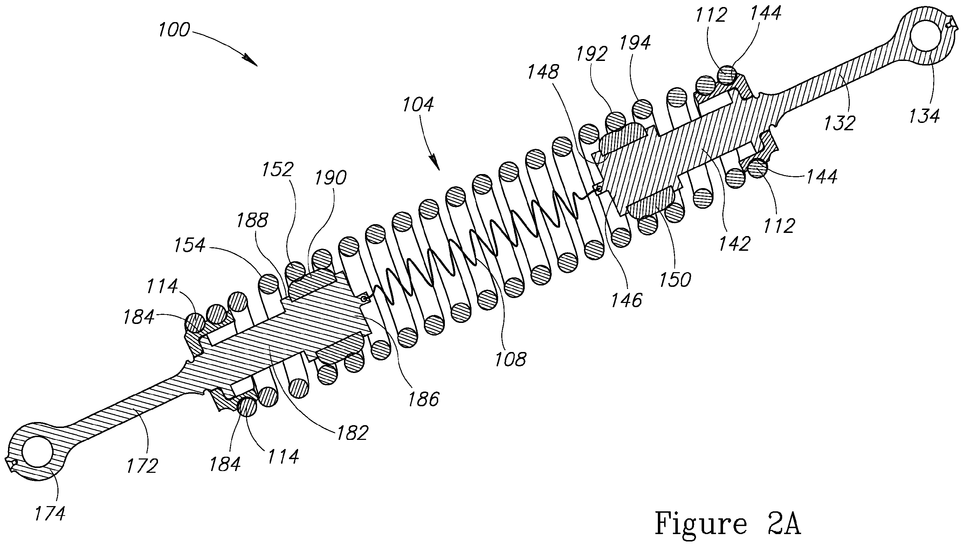

As shown in Figure 1A, the second spring end 106 is similarly coupled to the second terminal assembly 160 through the second set of helical grooves 184. The second terminal assembly is of similar construction to the first terminal assembly 120. As such, second terminal assembly 160 includes second terminal inner sub-assembly 180 and second terminal outer sub-assembly 170. The second energy-dissipating element 190 is positioned on a second terminal inner shaft 182, as shown in the cutaway view of Figure 2A. Second terminal outer sub-assembly 170 includes a second terminal outer shaft 172 and a second terminal mounting aperture 174.

System 100 includes safety leash 108 that couples first terminal inner sub-assembly 140 to second terminal sub-assembly 180 through the inner volume of spring 104. In the event that spring 104 catastrophically breaks and/or releases a substantially amount of energy to at least one of the terminal inner sub-assemblies 140/180, the two internal sub-assemblies 140/180 are coupled together to prevent the terminal assemblies 120/160, spring portions, or other parts from falling away or becoming projectiles. Safety leash 108 may be a coiled leash so that when spring 104 is stretched under tension, the uncoiling of coiled safety leash 108 compensates for the increased distance between the first and second terminal inner sub-assemblies 140/180. Safety leash 108 may be a braided cable, such as a steel braided cable. Safety leash 108 may include a sheath, such as a rubber sheath.

When spring 104 is undergoing oscillations, the amplitude of the linear momentum of first terminal assembly 120 is substantially equivalent to the amplitude of the linear momentum of second terminal assembly 160. The linear momentum of both first terminal assembly 120 and second terminal assembly 160 is directed along the longitudinal axis of spring 104, but the linear momenta are along opposing directions of the axis. Accordingly, when coupled by safety leash 108, the first terminal assembly 120 and the second terminal assembly 160 comprise a terminal assembly sub-system that includes a net linear momentum that is substantially equivalent to zero. Thus, in a catastrophic release of energy by spring 104, the energy transferred to the first/second terminal assemblies 120/160 does not result in a substantial projectile motion of the terminal assembly sub-system, thus increasing the safety of system 100.

Although Figure 1A shows system 100 as including two terminal assemblies 120/140 and two energy-dissipating elements 150/190, other embodiments are not so constrained. For instance, in at least one embodiment, the system 100 may include only a single energy-dissipating element and/or a single terminal assembly. In other embodiments, additional energy-dissipating elements may be included in system 100, including positioning addition energy-dissipating elements within the inner volume of spring 104.

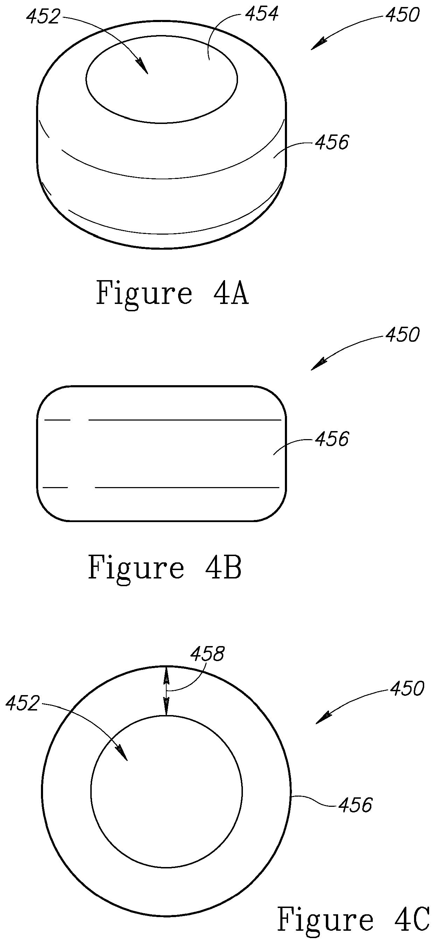

At least one of the energy-dissipating elements 150/190 may be a damper element and/or a damper device. One embodiment of an energy-dissipating element is shown as damper element 450 of Figures 4A-4C. An energy-dissipating element may be shaped to include at least one of a toroidal shape, an annular shape, a "donut" shape, a ring shape, an at least partially hollowed cylinder shape, or the like. An energy-dissipating element or device may be constructed from any material that damps oscillating motion. Such materials include, but are not limited to polymers or elastomers, such as a natural or synthetic rubber. Accordingly, energy-dissipating elements 150/190 may be a rubber "donut," torus, annulus, ring, or the like. In preferred embodiments, energy-dissipating elements 150/190 are constructed from an aerospace rubber.

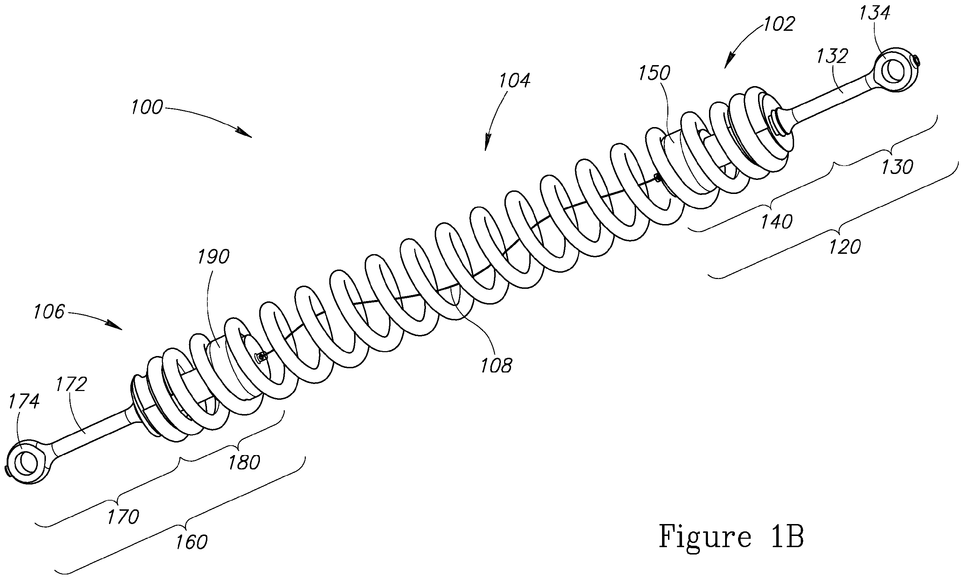

Figure 1B illustrates the vibration attenuation system 100 of Figure 1A in a tensioned state. Spring 104 is stretched under tension and the distance between the first terminal assembly 120 and the second terminal assembly 160 has increased. Coiled safety leash 108 has likewise uncoiled to compensate for the stretch in spring 104.

As discussed in greater detail below, when in a stretched state, each of energy-dissipating elements 150/190 engage with at least one of the coils of spring 104. This engagement transfers energy stored within the coils of spring 104 to the energy-dissipating elements 150/190, and is thus an energy-transferring engagement. The energy-dissipating elements 150/190 dissipate at least a portion of this transferred energy away from system 100. Accordingly, system 100 dampens vibrational and/or oscillatory motion. Cutaway views of system 100 are provided in Figures 2A-2C to show the energy transferring engagement between the coils of spring 104 and the energy-dissipating elements 150/190.

Design parameters for system 100 include the outer diameter of the energy-dissipating elements 150/190 and the inner diameter of spring 104. Appropriate parameter choices ensure that, during at least a portion of the spring's 104 displacement, each energy-dissipating element 150/190 engages with a portion of the coils as the coils slightly compress the dissipating elements 150/190 during at least a portion of the spring's displacement. This frictional and/or compressive engagement absorbs (and damps) a portion of the coils' kinetic energy.

Coils positioned toward the spring ends 102/106 may be tapered to include a reduced diameter. When the spring is elongated or stretched as shown in Figure 1B, the damper more forcefully engages with these tapered coils. Accordingly, tapering the distal coils achieves a progressive damping effect.

Figure 1C is a close-up view of first spring end 102 and first terminal assembly 120 of the vibration attenuation system of Figure 1A; the spring is shown transparent for illustrative purposes. The most distal coils 112 of first spring end 102 are received by the helical grooves 144 of first terminal inner sub-assembly 140 to couple the first spring end 102 to the first terminal inner shaft 142, first terminal outer shaft 132, and first terminal mounting aperture 134.

First terminal inner shaft 142 includes a first terminal receiving member 146 on the innermost end of first terminal inner shaft 142. In various embodiments, first energy-dissipating element 150 is positioned on and coupled to first terminal receiving member 146. Accordingly, the energy-dissipating elements 150/190 are "inline" with spring 104. In a preferred embodiment, the first terminal receiving member 146 includes a recessed or grooved portion 148 (as shown in Figure 2A) that is configured to receive the first energy-dissipating element 150.

As noted above, Figures 4A-4C provide various views of an embodiment of an energy-dissipating element this is consistent with the various embodiments disclosed herein. Figure 4A provides an isometric view of a toroidal, annular, or "donut" shaped energy-dissipating or damper element 450. Damper element 450 includes a damper or receiving aperture 452, an inner surface 454 of the damper aperture 452, and an outer surface 456. Damper or receiving aperture 452 may be a hole in damper element 450. Figure 4B shows a side-view of damper element 450. Figure 4C shows a top-view of damper element 450. As shown in Figures 4A-4C, damper element is topologically equivalent to a torus.

Damper element 450 is defined by a damper axis that is an axis of symmetry and centrally positioned in the damper aperture 452. Damper element 450 may include an outer radius, an inner radius, and a length (along the damper axis). The damper thickness 458 may be defined by the difference between the outer radius and the inner radius. The absolute and relative dimensions of the inner radius, outer radius, thickness, length, and the like of damper element 450 are not constrained by the invention. Rather, these dimensions are tailored to the specific application of a specific embodiment of the invention. Each of energy-dissipating elements 150/190 may include similar features to damper element 450.

As shown in Figures 4A-4B, the upper and lower (with respect to the longitudinal axis) portions of damper outer surface 456 may be tapered, curved, and/or graduated. The upper and/or lower tapering of damper element 450 may enable a progressive engagement with the coils of an energy-storing device, such as spring 104. The tapering results in an outer radius that varies over the tapered portion of damper element 450.

Referring back to Figure 1C, at least a portion of first terminal inner shaft 142 is received through an aperture in energy-dissipating element 150. The aperture may be similar to damper aperture 452 of Figures 4A-4C. In at least one embodiment, first energy-dissipating element 150 and the first terminal receiving member 146 are coupled together by at least one of a press fit, interference fit, a friction fit, or the like. Preferably, energy-dissipating element 150 can elastically deform or stretch to fit between the side flanges into the recessed portion 148 of terminal receiving member 146. The press or friction fit may be between an inner surface of the energy-dissipating element 150, such as inner surface 454, and a surface of the recessed portion 148 of first terminal receiving member 146. The first terminal inner sub-assembly 140 may also include coupling tab or coupling aperture 196 to couple safety leash 108 to the first terminal inner sub-assembly 140. As mentioned above, the second terminal sub-assembly 160 may include similar components to first terminal sub-assembly 140.

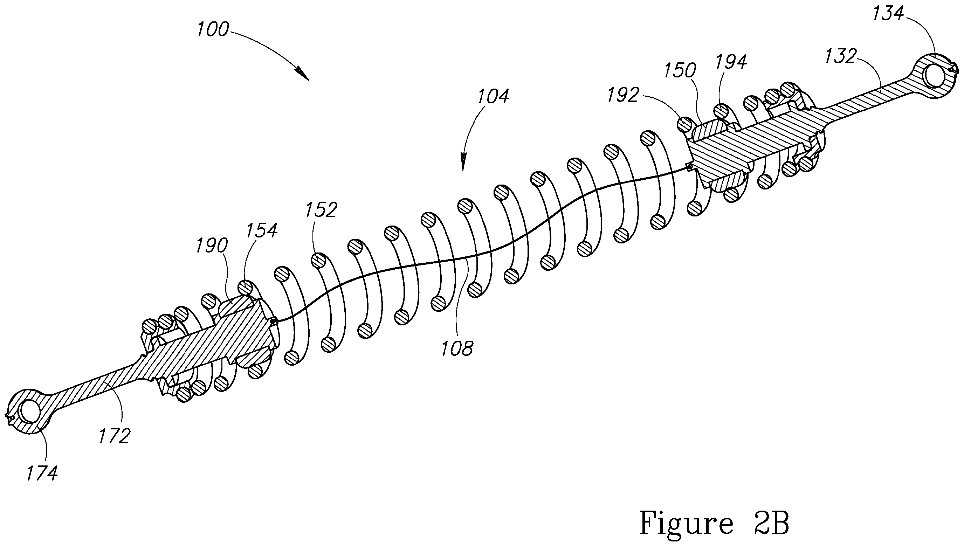

When in a relaxed state, as shown in Figure 1C, the outer surface of energy-dissipating element 150 is adjacent to an inner surface of coil 192. Coil 192 is closer to the middle of spring 104 than more distal coil 194. Depending on the choice of the outer radius of energy-dissipating element 150 and the inner radius of relaxed coil 192, energy-dissipating element 150 may be in engagement with adjacent coil 192. In other embodiments, a gap exists between energy-dissipating element 150 and relaxed coil 192. Because of the gap, a frictional engagement between energy-dissipating element 150 and coil 192 is not occurring when system 100 is in a relaxed state. In these embodiments, an energy-transferring engagement occurs only when spring 104 in stretched under tension beyond a work threshold, such as a tension threshold. Accordingly, the energy-dissipating elements 150/190 are not exposed to excessive frictional wear, which prolongs the lifetime of energy-dissipating elements 150/190. As shown in a cutaway view provided in Figure 2B, when spring 104 is stretched under tension beyond the tension threshold, the energy-dissipating element 150 is in engagement with coil 194. As noted throughout, this energy-transferring engagement with coil 194 may be a compressive engagement and/or a frictional engagement.

When an energy-dissipating or damper element is in engagement with at least one of the coils of an energy-storing element, a portion of the energy stored in the coils of the energy-storing element is transferred to the damper element. A portion of this transferred energy is dissipated away from system 100 by the damper element. At least a portion of this energy transfer between the engaging coil and the damper element is due to when under tension, a coil stores energy by an elongation in the longitudinal direction of spring 104. Consequently, the inner diameter or radius of the engaging coil in decreased. A decreased inner radius results in the stretched coil compressing the outer surface of the damper element. This compression deforms the elastic outer surface of the damper element. The compression and deforming of the damper element transfers energy from the coil to the damper. Due to the damping properties of the damper element, some of the transferred energy is dissipated from the system.

During compression or elongation of spring 104, the relative positions between energy-dissipating elements 150/190 are translated relative to the coils of spring 104. Thus, in some embodiments, additional energy dissipation occurs due to frictional engagement and frictional energy loss between the outer surface of the energy-dissipating elements 150/190 and the inner surfaces of the coils when the energy-dissipating elements 150/190 translates along the longitudinal axis of spring 104.

Figure 2A is a cross-sectioned view of the vibration attenuation system 100 of Figure 1A in a relaxed state. System 100 includes several solid members including first/second terminal outer shafts 132/172, first/second terminal inner shafts 142/182, and first/second terminal receiving members 146/186. One or more solid members may be included to provide at least one of strength, mass, and/or rigidity to system 100. At the first terminal of system 100, helical grooves 144 receive distal coils 112. Likewise, at the second terminal of system 100, helical grooves 184 receive distal coils 114. Safety leash 108 is in a coiled state. First and second mounting apertures 134/174 enable the coupling of system 100 to other structures.

First terminal receiving member 146 includes first recessed portion 148 that enables the coupling between first energy-dissipating element 150 and the first terminal receiving portion 146. Likewise, second terminal receiving member 186 includes second recessed portion 188 to enable the coupling between second energy-dissipating element 190 and the second terminal receiving portion 186. The first and second recessed portions 148/188 may be sized in both recessed depth and recessed length to receive, as well as stabilize the position of the first/second energy-dissipating elements 150/190. The upper and lower lips on the recessed portions 148/188 may decrease the likelihood any shifting of the longitudinal position of energy-dissipating elements 150/190 along the terminal receiving portions 146/148.

As discussed above, when in a relaxed state, first energy-dissipating element 150 is adjacent to coil 192. Likewise, second energy-dissipating element 190 is adjacent to corresponding coil 152. In some embodiments, when spring 104 is relaxed, energy-dissipating or damper elements 150/190 may be an energy-transferring engagement with coils 192/152 respectively. This engagement may be a frictional and/or compressive engagement. In preferred embodiments, when in a relaxed state, a gap between damper elements 150/190 and corresponding adjacent coils 192/152 exists so that no engagement occurs unless the spring 104 is under a threshold of tension, preventing excessive wear on damper elements 150/190.

Figure 2B is a cross-sectioned view of the vibration attenuation system 100 of Figure 1B in a tensioned state. Spring 104 is elongated and coil 194 is in an energy-transferring engagement with first energy-dissipating element 150. Likewise, coil 154 is in an energy-transferring engagement with second energy-dissipating element 190. In at least some embodiments, other a plurality of coils may be in simultaneous engagement with at least one of energy-dissipating elements 150/190. These engagements result in damping the oscillatory motion of system 100. In some embodiments, the coils that interact with energy-dissipating elements 150/190, such as coils 194/154, include a reduced radius or are otherwise tapered. Tapered coils, as well as the tapered, curved, and/or graduated upper and lower (with respect to the longitudinal axis) portions of the energy-dissipating elements 150 provide a progressive damping effect. Furthermore, in some embodiments, spring 104 may be prone to failing or breaking near the tapered coils. In preferred embodiments, the energy-dissipating elements 150/190 are positioned to engage with the tapered coils to further reduce the likelihood of catastrophic failure or damage to spring 104.

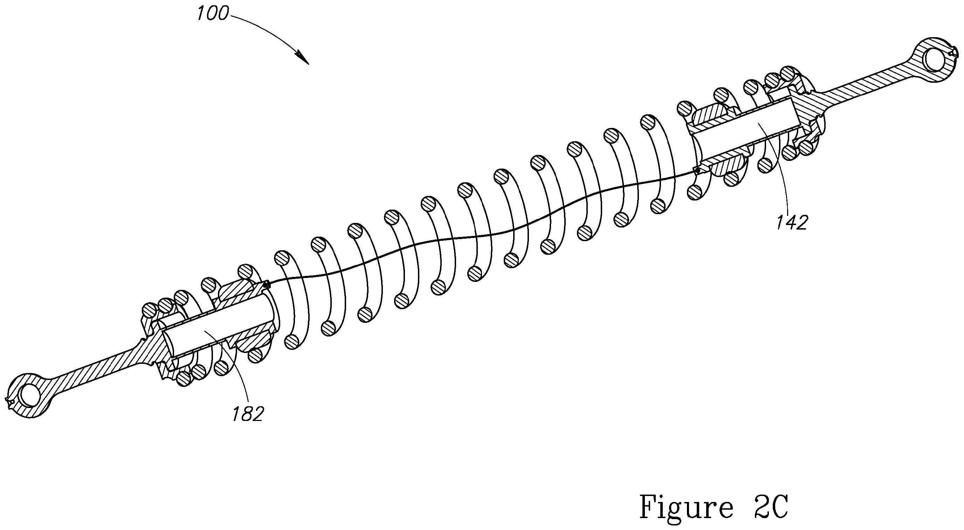

Figure 2C illustrates another embodiment of a vibration attenuation system 100 that includes hollow members. The system is in a tensioned state. First terminal inner shaft 142 and second terminal inner shaft 182 have been hollowed to decrease an overall mass of system 100.

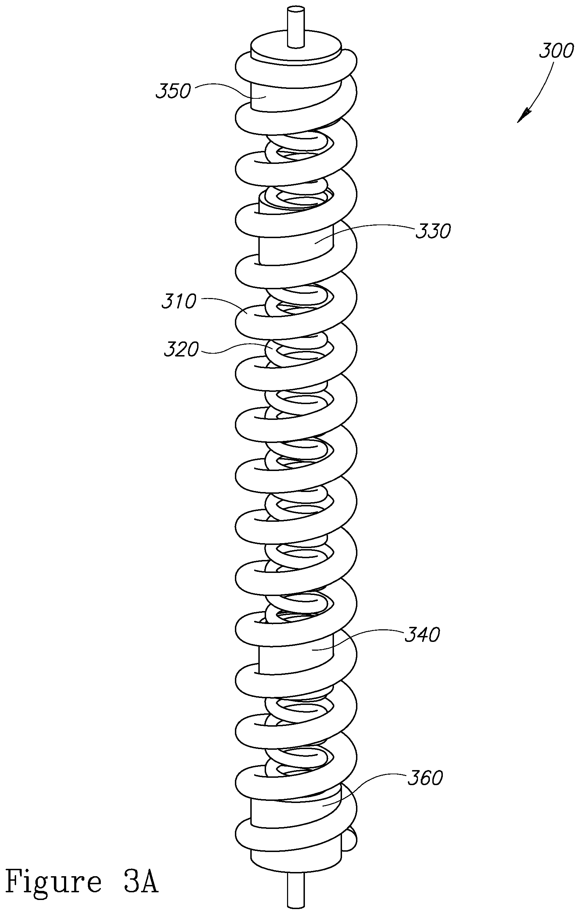

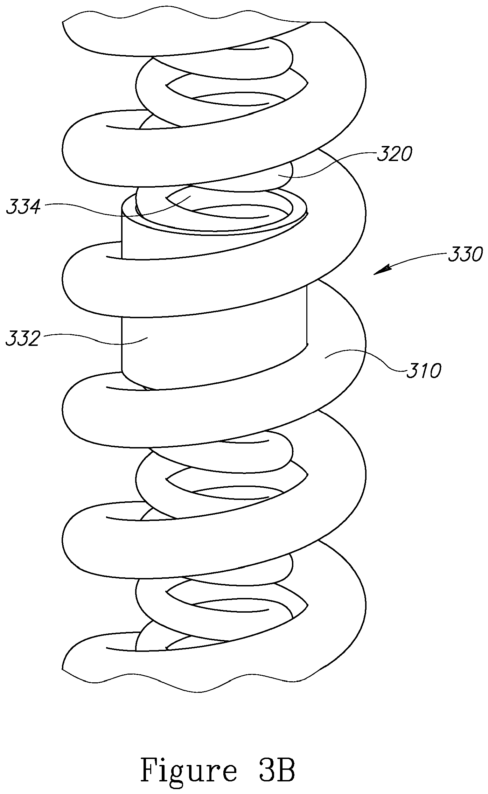

Figure 3A illustrates another embodiment of a vibration attenuation system 300 that includes two energy-storing elements 310/320, two energy-dissipating elements 330/340. Each of the energy-dissipating elements 330/340 are common to each of the energy-storing elements 310/320. System 300 includes a pair of terminals 350/360. Figure 3B is a close-up view the vibration attenuation system 300 of Figure 3A that shows a close-up of the first common energy-dissipating element 330 in engagement with both the first energy-storing element 310 and the second energy-storing element 320. The first energy-dissipating element 330 includes an inner surface 334 and an outer surface 332. In various embodiments, at least one of the first and second energy-dissipating elements 330/340 may include similar features to damper element 450 of Figures 4A-4C. Accordingly, first energy-dissipating element 330 may be a first annular damper element and second energy-dissipating element 340 may be a second annular damper element 340.

First energy-storing element 310 may be a first spring and second energy-storing elements 320 may be a second spring. First spring 310 is configured parallel to second spring 320, such that the transmission of a force or energy-carrying signal may be distributed between first spring 310 and second spring 320. In preferred embodiments, first spring 310 and second spring 320 are arranged as concentric springs such that the longitudinal axis of first spring 310 is coaxial with the longitudinal axis of second spring 320. First spring 310 is an outer spring and second spring 320 is an inner spring. In at least one embodiment, system 300 includes three or more damper elements.

First terminal 350 couples first spring 310 to second spring 320 at the first end of each of the springs 310/320. Likewise, second terminal 360 couples first spring 310 to second spring 320 at the second end of each of the springs 310/320. The inner surfaces of the terminal 350/360 may include helical groves to rotatably receive the first end coils of inner spring 320. The outer surfaces of the terminal 350/360 may include helical groves to rotatably receive the first end coils of inner spring 320. In preferred embodiments,

First spring 310 may include a first spring constant that characterizes the proportionality between the first spring's 310 restoring force and the displacement of the first spring 310. Similarly, second spring 320 may include a second spring constant that characterizes the proportionality between the second spring's 320 restoring force and the displacement of the second spring 310. In preferred embodiments, the first and second spring constants are dissimilar. In other embodiments, the first and second spring constants are substantially equivalent.

The first and second dampers 330/340 are sandwiched between the concentrically arranged inner spring 320 and outer spring 310. As such, both a first receiving aperture of the first damper 330 and a second receiving aperture of the second damper 340 receive the inner spring 320. When in position, at least one helical coil of the outer first spring 310 engages an outer surface of at least one of dampers 330/340 along a helical arc subtending an angle of at least 90°. In some embodiments, the angle subtending the helical arc is at least 180°. In at least one embodiment, the angle subtending the helical arc is at least 360°. In preferred embodiments, a plurality of coils of the first spring 310 engages with the outer surface of first damper element 330 and another plurality of coils of the first spring 310 engages with the outer surface of second damper element 340.

When in position, at least one helical coil of the inner second spring 320 engages an inner surface of the receiving aperture of at least one of dampers 330/340 along a helical arc subtending an angle of at least 90°. In some embodiments, the angle subtending the helical arc is at least 180°. In at least one embodiment, the angle subtending the helical arc is at least 360°. In some embodiments, a plurality of coils of the second spring 320 engages with the inner surface of first damper element 330 and another plurality of coils of the second spring 312 engages with the inner surface of second damper element 340.

As noted throughout, the engagement between the coils and the damper elements may be a frictional engagement, a compressive engagement, or a combination thereof. The engagement transfers energy from the springs 310/320 to the dampers 330/340. The dampers 330/340 dissipate energy away from system 300, as well as dampen the transmission of a signal over springs 310/320. The dampers 330/340 also attenuate oscillatory motion of the system 300. In preferred embodiments, the dampers 330/340 simultanously engage both the outer spring 310 and the inner spring 320.

In at least one embodiment, the inner spring 320 compressively engages with the inner surface of each of the dampers 330/340 when the inner spring 320 is under compression. The outer spring 310 compressively engages with the outer surface of each of the dampers 330/340 when the outer spring 310 is under tension. The oscillatory motion of the outer and inner springs 310/320 may be at substantially similar or dissimilar frequencies. In addition, the oscillatory motion of the outer and inner springs 310/320 may relatively be in-phase or out-of-phase.

In some embodiments, the dampers 330/340 are positioned along the coaxial longitudinal axes of the outer and inner springs 310/320 to be adjacent to regions of the springs 310/320 that are prone to breaking. In preferred embodiments, the dampers 330/340 efficiently damp oscillatory motion over frequency windows that include the resonance frequencies of both the first spring 310 and the second spring 320. The presences of the dampers 330/340 decreases the likelihood of damage to the springs 310/320.

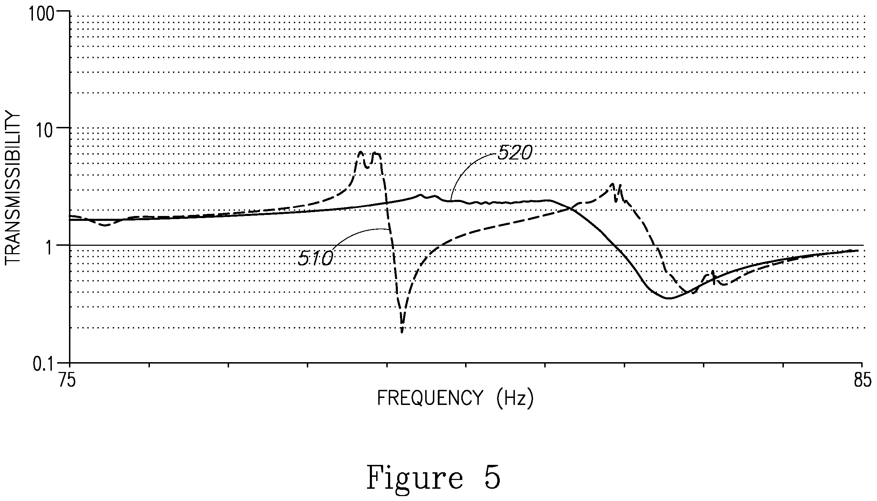

Figure 5 shows plots of the un-attenuated and the attenuated transmission of an input signal, where the attenuated transmission is enabled by the various embodiments disclosed herein. Curve 510 shows a representative un-attenuated transmissibility of an input signal that varies in frequency, between approximately 75 Hz to 85 Hz, across a spring system without damping elements included in the system. A resonance transmission of the signal occurs between 73 Hz and 74 Hz. Curve 520 shows a representative attenuated transmissibility of an input signal that varies in frequency across an attenuation system consistent with the embodiments disclosed herein. The resonance transmission between 73 Hz and 74 Hz is damped and/or attenuated. Note the logarithmic scale for the transmissibility indicated by the y-axis. Attenuating the transmission of the signal, and specifically damping the transmissions around the resonance frequencies prevents damage and catastrophic failure of the spring systems disclosed herein.

## Claims

1. A vibration attenuation system for attenuating a transmission of an input signal, the system comprising:
a helical spring (104) that includes a plurality of helical coils (112, 114, 152, 154, 192, 194), a first end (102), and a second end (106), wherein said plurality of helical coils defines an inner volume of the helical spring intermediate the first and second ends;
a first terminal (120) that includes a first inner member (142), wherein the first terminal (120) is coupled to the first end of the helical spring and the first inner member (142) extends into the inner volume of the helical spring (104); and
a first damping element (150) positioned on the first inner member (142) such that the first damping element (150) is within the inner volume of the helical spring (104), and when the input signal is provided to the helical spring (104) the first damping element (150) engages at least one of the plurality of helical coils (112, 114, 152, 154, 192, 194) and attenuates the transmission of at least a portion of the input signal;
wherein said plurality of coils (112, 114, 152, 154, 192, 194) includes a first helical coil and a second helical coil such that a distance between the first coil and the first end (102) is greater than a distance between the second coil and the first end (102), and when the input signal is provided to the helical spring (104) a magnitude of a first engagement force that is between the first damping element (150) and the first coil is less than a magnitude of a second engagement force that is between the first damping element (150) and the second coil.

2. The system of claim 1, wherein the first damping element is a toroidal damping element (150) that is topologically equivalent to a torus and the toroidal damping element (150) is positioned on the first inner member (142) such that a hole in the toroidal damping element (150) receives the first inner member (142).

3. The system of claim 1, wherein the first inner member (142) includes a recessed portion (148) and the first damping element (150) is positioned on the recessed portion (148) of the first inner member (142).

4. The system of claim 1, wherein the first terminal (120) includes a helical groove (144) such that the helical groove (144) engages with at least a helical coil adjacent to the first end (102) of the helical spring (104) to couple the first terminal (120) to the spring (104).

5. The system of claim 1, wherein the first terminal (120) includes a portion that is external to the inner volume of the helical spring (104) and the external portion includes a mounting aperture (134, 174).

6. The system of claim 1, wherein when the helical spring (104) is in a first state, such that the helical spring (104) is storing a first amount of energy, the first damping element (150) does not engage with the plurality of helical coils (112, 114, 152, 154, 192, 194).

7. The system of claim 1, wherein the engagement between the first damping element (150) and the at least one of the plurality of helical coils (112, 114, 152, 154, 192, 194) includes at least a frictional engagement between the first damping element (150) and the at least one of the plurality of coils (112, 114, 152, 154, 192, 194).

8. The system of claim 1, wherein the engagement between the first damping element (150) and the at least one of the plurality of helical coils (112, 114, 152, 154, 192, 194) includes a compressive force on the first damping element (150).

9. The system of claim 1, further comprising:
a second terminal (160) that includes a second inner member (182), wherein the second terminal (160) is coupled to the second end (106) of the helical spring (104) and the second inner member (182) extends into the inner volume of the helical spring (104); and
a second damping element (190) positioned on the second inner member (182) such that the second damping element (190) is within the inner volume of the helical spring (104) and when the input signal is provided to the helical spring (104), the second damping element (190) engages another of the plurality of helical coils (112, 114, 152, 154, 192, 194) and further attenuates the transmission of at least a portion of the input signal.

10. The system of claim 9, further comprising a safety leash (108), wherein a first end of the safety leash (108) is coupled to the first inner member (142) and a second end of the safety leash (108) is coupled to the second inner member (182).

11. A spring and damper system for damping vibrational energy, the system comprising:
a first spring (310) that includes at least a first helical coil and a first longitudinal axis within a first internal volume of the first spring (310);
a second spring (320) that includes at least a second helical coil and a second longitudinal axis, wherein the first longitudinal axis and the second longitudinal axis are substantially aligned and the second coil (320) is disposed within the first internal volume of the first spring (310); and
a first damper element (330) that includes an outer surface (332), a first receiving aperture, and an inner surface (334) of the aperture, wherein the aperture receives at least the second coil of the second spring such the second coil is adjacent to the inner surface (334) and the first coil of the first spring (310) is disposed adjacent to the outer surface (332);
wherein the first coil of the first spring (310) is configured and arranged to engage with the outer surface (332) of the first damper element (330) along a first helical arc subtending an angle of at least 90° and the second coil of the second spring (320) is configured and arranged to engage with the inner surface (334) of the first damper element (330) along a second helical arc subtending an angle of at least 90°;
wherein the first spring (310) includes a third helical coil and the second spring (320) includes a fourth helical coil that is disposed within the first internal volume of the first spring (310);
said system further comprising:
a second damper element (340) that includes a second outer surface, a second receiving aperture, and a second inner surface of the second aperture, wherein the second aperture receives at least the fourth coil of the second spring (320) such the fourth coil is adjacent to the second inner surface and the third coil of the first spring (310) is disposed adjacent to the second outer surface;
wherein the third coil of the first spring (310) is configured and arranged to engage with the second outer surface of the second damper element (340) along a third helical arc subtending an angle of at least 90° and the fourth coil of the second spring (320) is configured and arranged to engage with the second inner surface of the second damper element (340) along a fourth helical arc subtending an angle of at least 90°.

12. The system of claim 11, further comprising a first terminal (350) that couples a first end of the first spring (310) to a second end of the second spring (320).

13. The system of claim 12, wherein the first terminal (350) includes a first helical groove on an outer surface (332) that engages with at least one helical coil of the first spring (310) and a second helical groove on an inner surface (334) that engages with at least one helical coil of the second spring (320).

14. The system of claim 11, wherein the first spring (310) includes a first resonant frequency and the second spring (320) includes a second resonant frequency and the first resonant frequency and the second resonant frequency are dissimilar resonant frequencies.

15. The system of claim 11, wherein the first spring (310) includes a first spring constant and the second spring (320) includes a second spring constant and the first spring constant and the second spring constant are dissimilar spring constants.

## Patentansprüche

1. Schwingungsdämpfungssystem zum Dämpfen einer Übertragung eines Eingangssignals, das System umfassend:
eine Schraubenfeder (104), die mehrere schraubenförmige Windungen (112, 114, 152, 154, 192, 194), und ein erstes Ende (102), und ein zweites Ende (106) umfasst, wobei die mehreren schraubenförmigen Windungen ein Innenvolumen der Schraubenfeder zwischen dem ersten und zweiten Ende definieren;
einen ersten Anschluss (120), der ein erstes Innenelement (142) umfasst, wobei der erste Anschluss (120) mit dem ersten Ende der Schraubenfeder gekoppelt ist und das erste Innenelement (142) sich in das Innenvolumen der Schraubenfeder (104) erstreckt; und
ein erstes Dämpfungselement (150), das derart auf dem ersten Innenelement (142) angeordnet ist, dass sich das erste Dämpfungselement (150) innerhalb des Innenvolumens der Schraubenfeder (104) befindet, und wenn das Eingangssignal der Schraubenfeder (104) zugeführt wird, das erste Dämpfungselement (150) in mindestens eine der mehreren schraubenförmigen Windungen (112, 114, 152, 154, 192, 194) eingreift und die Übertragung von mindestens einem Abschnitt des Eingangssignals dämpft;
wobei die mehreren Windungen (112, 114, 152, 154, 192, 194) eine erste schraubenförmige Windung und eine zweite schraubenförmige Windung umfassen, derart, dass ein Abstand zwischen der ersten Windung und dem ersten Ende (102) größer ist, als ein Abstand zwischen der zweiten Windung und dem ersten Ende (102), und, wenn das Eingangssignal der Schraubenfeder (104) zugeführt wird, eine Größe einer ersten Eingriffskraft, die zwischen dem ersten Dämpfungselement (150) und der ersten Windung besteht, kleiner ist als eine Größe einer zweiten Eingriffskraft, die zwischen dem ersten Dämpfungselement (150) und der zweiten Windung besteht.

2. System nach Anspruch 1, wobei das erste Dämpfungselement ein toroidales Dämpfungselement (150) ist, das topologisch einem Torus entspricht und das toroidale Dämpfungselement (150) derart auf dem ersten Innenelement (142) angeordnet ist, dass ein Loch im toroidalen Dämpfungselement (150) das erste Innenelement (142) aufnimmt.

3. System nach Anspruch 1, wobei das erste Innenelement (142) einen vertieften Abschnitt (148) umfasst und das erste Dämpfungselement (150) auf dem vertieften Abschnitt (148) des ersten Innenelements (142) angeordnet ist.

4. System nach Anspruch 1, wobei der erste Anschluss (120) derart eine schraubenförmige Nut (144) umfasst, dass die schraubenförmige Nut (144) mindestens mit einer schraubenförmigen Windung, benachbart zum ersten Ende (102) der Schraubenfeder (104) in Eingriff steht, um den ersten Anschluss (120) mit der Feder (104) zu koppeln.

5. System nach Anspruch 1, wobei der erste Anschluss (120) einen Abschnitt umfasst, der außerhalb des Innenvolumens der Schraubenfeder (104) liegt, und der äußere Abschnitt eine Befestigungsöffnung (134, 174) umfasst.

6. System nach Anspruch 1, wobei, wenn sich die Schraubenfeder (104) derart in einem ersten Zustand befindet, dass die Schraubenfeder (104) eine erste Energiemenge speichert, das erste Dämpfungselement (150) nicht mit den mehreren schraubenförmigen Windungen (112, 114, 152, 154, 192, 194) in Eingriff steht.

7. System nach Anspruch 1, wobei der Eingriff zwischen dem ersten Dämpfungselement (150) und der mindestens einen der mehreren schraubenförmigen Windungen (112, 114, 152, 154, 192, 194) mindestens einen Reibungseingriff zwischen dem ersten Dämpfungselement (150) und der mindestens einen der mehreren Windungen (112, 114, 152, 154, 192, 194) umfasst.

8. System nach Anspruch 1, wobei der Eingriff zwischen dem ersten Dämpfungselement (150) und der mindestens einen der mehreren schraubenförmigen Windungen (112, 114, 152, 154, 192, 194) eine Druckkraft auf das erste Dämpfungselement (150) umfasst.

9. System nach Anspruch 1, ferner umfassend:
einen zweiten Anschluss (160), der ein zweites Innenelement (182) umfasst, wobei der zweite Anschluss (160) mit dem zweiten Ende (106) der Schraubenfeder (104) gekoppelt ist und das zweite Innenelement (182) sich in das Innenvolumen der Schraubenfeder (104) erstreckt; und
ein zweites Dämpfungselement (190), das derart auf dem zweiten Innenelement (182) angeordnet ist, dass sich das zweite Dämpfungselement (190) innerhalb des Innenvolumens der Schraubenfeder (104) befindet, und, wenn das Eingangssignal der Schraubenfeder (104) zugeführt wird, das zweite Dämpfungselement (190) in eine andere der mehreren schraubenförmigen Windungen (112, 114, 152, 154, 192, 194) eingreift und ferner die Übertragung von mindestens einem Abschnitt des Eingangssignals dämpft.

10. System nach Anspruch 9, das ferner eine Sicherheitsleine (108) umfasst, wobei ein erstes Ende der Sicherheitsleine (108) mit dem ersten Innenelement (142) gekoppelt ist und ein zweites Ende der Sicherheitsleine (108) mit dem zweiten Innenelement (182) gekoppelt ist.

11. Feder und Dämpfungssystem zum Dämpfen von Schwingungsenergie, das System umfassend:
eine erste Feder (310), die mindestens eine erste schraubenförmige Windung und eine erste Längsachse innerhalb eines ersten Innenvolumens der ersten Feder (310) umfasst;
eine zweite Feder (320), die mindestens eine zweite schraubenförmige Windung und eine zweite Längsachse umfasst, wobei die erste Längsachse und die zweite Längsachse im Wesentlichen aufeinander ausgerichtet sind und die zweite Windung (320) innerhalb des ersten Innenvolumens der ersten Feder (310) angeordnet ist; und
ein erstes Dämpferelement (330), das eine Außenfläche (332), eine erste Aufnahmeöffnung, und eine Innenfläche (334) der Öffnung umfasst, wobei die Öffnung mindestens die zweite Windung der zweiten Feder aufnimmt, derart, dass die zweite Windung benachbart zur Innenfläche (334) angeordnet ist und die erste Windung der ersten Feder (310) benachbart zur Außenfläche (332) angeordnet ist;
wobei die erste Windung der ersten Feder (310) so konfiguriert und angeordnet ist, dass sie mit der Außenfläche (332) des ersten Dämpferelements (330) entlang eines ersten schraubenförmigen Bogens in Eingriff kommt, der einen Winkel von mindestens 90° einschließt, und die zweite Windung der zweiten Feder (320) so konfiguriert und angeordnet ist, dass sie mit der Innenfläche (334) des ersten Dämpferelements (330) entlang eines zweiten schraubenförmigen Bogens in Eingriff kommt, der einen Winkel von mindestens 90° einschließt;
wobei die erste Feder (310) eine dritte schraubenförmige Windung umfasst und die zweite Feder (320) eine vierte schraubenförmige Windung umfasst, die innerhalb des ersten Innenvolumens der ersten Feder (310) angeordnet ist,
wobei das System ferner umfasst:
ein zweites Dämpferelement (340), das eine zweite Außenfläche, eine zweite Aufnahmeöffnung, und eine zweite Innenfläche der zweiten Öffnung umfasst, wobei die zweite Öffnung mindestens die vierte Windung der zweiten Feder (320) aufnimmt, derart, dass die vierte Windung benachbart zur zweiten Innenfläche angeordnet ist und die dritte Windung der ersten Feder (310) benachbart zur zweiten Außenfläche angeordnet ist;
wobei die dritte Windung der ersten Feder (310) so konfiguriert und angeordnet ist, dass sie mit der zweiten Außenfläche des zweiten Dämpferelements (340) entlang eines dritten schraubenförmigen Bogens in Eingriff kommt, der einen Winkel von mindestens 90° einschließt, und die vierte Windung der zweiten Feder (320) so konfiguriert und angeordnet ist, dass sie mit der zweiten Innenfläche des zweiten Dämpferelements (340) entlang eines vierten schraubenförmigen Bogens in Eingriff kommt, der einen Winkel von mindestens 90° einschließt.

12. System nach Anspruch 11, das ferner einen ersten Anschluss (350) umfasst, der ein erstes Ende der ersten Feder (310) mit einem zweiten Ende der zweiten Feder (320) koppelt.

13. System nach Anspruch 12, wobei der erste Anschluss (350) eine erste schraubenförmige Nut auf einer Außenfläche (332), die mit mindestens einer schraubenförmigen Windung der ersten Feder (310) in Eingriff steht, und eine zweite schraubenförmige Nut auf einer Innenfläche (334), die mit mindestens einer schraubenförmigen Windung der zweiten Feder (320) in Eingriff steht, umfasst.

14. System nach Anspruch 11, wobei die erste Feder (310) eine erste Resonanzfrequenz aufweist und die zweite Feder (320) eine zweite Resonanzfrequenz aufweist und die erste Resonanzfrequenz und die zweite Resonanzfrequenz ungleiche Resonanzfrequenzen sind.

15. System nach Anspruch 11, wobei die erste Feder (310) eine erste Federkonstante aufweist und die zweite Feder (320) eine zweite Federkonstante aufweist und die erste Federkonstante und die zweite Federkonstante ungleiche Federkonstanten sind.

## Revendications

1. Système d'atténuation de vibrations pour atténuer une transmission d'un signal d'entrée, le système comprenant :
un ressort hélicoïdal (104) qui inclut une pluralité de spires hélicoïdales (112, 114, 152, 154, 192, 194), une première extrémité (102) et une seconde extrémité (106), dans lequel ladite pluralité de spires hélicoïdales définit un volume intérieur du ressort hélicoïdal intermédiaire aux première et seconde extrémités ;
une première terminaison (120) qui inclut un premier élément intérieur (142), dans lequel la première terminaison (120) est couplée à la première extrémité du ressort hélicoïdal et le premier élément intérieur (142) s'étend dans le volume intérieur du ressort hélicoïdal (104) ; et
un premier élément d'amortissement (150) positionné sur le premier élément intérieur (142) de sorte que le premier élément d'amortissement (150) est dans le volume intérieur du ressort hélicoïdal (104), et lorsque le signal d'entrée est fourni au ressort hélicoïdal (104), le premier élément d'amortissement (150) met en prise au moins l'une de la pluralité de spires hélicoïdales (112, 114, 152, 154, 192, 194) et atténue la transmission d'au moins une portion du signal d'entrée ;
dans lequel ladite pluralité de spires (112, 114, 152, 154, 192, 194) inclut une première spire hélicoïdale et une deuxième spire hélicoïdale de sorte qu'une distance entre la première spire et la première extrémité (102) est plus grande qu'une distance entre la deuxième spire et la première extrémité (102), et lorsque le signal d'entrée est fourni au ressort hélicoïdal (104), une amplitude d'une première force de mise en prise qui est entre le premier élément d'amortissement (150) et la première spire est inférieure à une amplitude d'une seconde force de mise en prise qui est entre le premier élément d'amortissement (150) et la deuxième spire.

2. Système selon la revendication 1, dans lequel le premier élément d'amortissement est un élément d'amortissement toroïdal (150) qui est équivalent d'un point de vue topologique à un tore et l'élément d'amortissement toroïdal (150) est positionné sur le premier élément intérieur (142) de sorte qu'un trou dans l'élément d'amortissement toroïdal (150) reçoit le premier élément intérieur (142).

3. Système selon la revendication 1, dans lequel le premier élément intérieur (142) inclut une portion en retrait (148) et le premier élément d'amortissement (150) est positionné sur la portion en retrait (148) du premier élément intérieur (142).

4. Système selon la revendication 1, dans lequel la première terminaison (120) inclut une rainure hélicoïdale (144) de sorte que la rainure hélicoïdale (144) se met en prise avec au moins une spire hélicoïdale adjacente à la première extrémité (102) du ressort hélicoïdal (104) pour coupler la première terminaison (120) au ressort (104).

5. Système selon la revendication 1, dans lequel la première terminaison (120) inclut une portion qui est externe au volume intérieur du ressort hélicoïdal (104) et la portion externe inclut une ouverture de montage (134, 174) .

6. Système selon la revendication 1, dans lequel lorsque le ressort hélicoïdal (104) est dans un premier état, de sorte que le ressort hélicoïdal (104) stocke une première quantité d'énergie, le premier élément d'amortissement (150) ne se met pas en prise avec la pluralité de spires hélicoïdales (112, 114, 152, 154, 192, 194) .

7. Système selon la revendication 1, dans lequel la mise en prise entre le premier élément d'amortissement (150) et l'au moins une de la pluralité de spires hélicoïdales (112, 114, 152, 154, 192, 194) inclut au moins une mise en prise par friction entre le premier élément d'amortissement (150) et l'au moins une de la pluralité de spires (112, 114, 152, 154, 192, 194).

8. Système selon la revendication 1, dans lequel la mise en prise entre le premier élément d'amortissement (150) et l'au moins une de la pluralité de spires hélicoïdales (112, 114, 152, 154, 192, 194) inclut une force de compression sur le premier élément d'amortissement (150).

9. Système selon la revendication 1, comprenant en outre :
une seconde terminaison (160) qui inclut un second élément intérieur (182), dans lequel la seconde terminaison (160) est couplée à la seconde extrémité (106) du ressort hélicoïdal (104) et le second élément intérieur (182) s'étend jusque dans le volume intérieur du ressort hélicoïdal (104) ; et
un second élément d'amortissement (190) positionné sur le second élément intérieur (182) de sorte que le second élément d'amortissement (190) est dans le volume intérieur du ressort hélicoïdal (104) et lorsque le signal d'entrée est fourni au ressort hélicoïdal (104), le second élément d'amortissement (190) met en prise une autre de la pluralité de spires hélicoïdales (112, 114, 152, 154, 192, 194) et atténue en outre la transmission d'au moins une portion du signal d'entrée.

10. Système selon la revendication 9, comprenant en outre une attache de sécurité (108), dans lequel une première extrémité de l'attache de sécurité (108) est couplée au premier élément intérieur (142) et une seconde extrémité de l'attache de sécurité (108) est couplée au second élément intérieur (182).

11. Système d'amortisseur et ressort pour amortir de l'énergie de vibrations, le système comprenant :
un premier ressort (310) qui inclut au moins une première spire hélicoïdale et un premier axe longitudinal à l'intérieur d'un premier volume interne du premier ressort (310) ;
un second ressort (320) qui inclut au moins une deuxième spire hélicoïdale et un second axe longitudinal, dans lequel le premier axe longitudinal et le second axe longitudinal sont sensiblement alignés et la deuxième spire (320) est disposée à l'intérieur du premier volume interne du premier ressort (310) ; et
un premier élément amortisseur (330) qui inclut une surface extérieure (332), une première ouverture de réception, et une surface intérieure (334) de l'ouverture, dans lequel l'ouverture reçoit au moins la deuxième spire du second ressort de sorte que la deuxième spire est adjacente à la surface intérieure (334) et la première spire du premier ressort (310) est disposée adjacente à la surface extérieure (332) ;
dans lequel la première spire du premier ressort (310) est configurée et agencée pour se mettre en prise avec la surface extérieure (332) du premier élément amortisseur (330) le long d'un premier arc hélicoïdal sous-tendant un angle d'au moins 90° et la deuxième spire du second ressort (320) est configurée et agencée pour se mettre en prise avec la surface intérieure (334) du premier élément amortisseur (330) le long d'un deuxième arc hélicoïdal sous-tendant un angle d'au moins 90° ;
dans lequel le premier ressort (310) inclut une troisième spire hélicoïdale et le second ressort (320) inclut une quatrième spire hélicoïdale qui est disposée à l'intérieur du premier volume interne du premier ressort (310) ;
ledit système comprenant en outre :
un second élément amortisseur (340) qui inclut une seconde surface extérieure, une seconde ouverture de réception, et une seconde surface intérieure de la seconde ouverture, dans lequel la seconde ouverture reçoit au moins la quatrième spire du second ressort (320) de sorte que la quatrième spire est adjacente à la seconde surface intérieure et la troisième spire du premier ressort (310) est disposée adjacente à la seconde surface extérieure ;
dans lequel la troisième spire du premier ressort (310) est configurée et agencée pour se mettre en prise avec la seconde surface extérieure du second élément amortisseur (340) le long d'un troisième arc hélicoïdal sous-tendant un angle d'au moins 90° et la quatrième spire du second ressort (320) est configurée et agencée pour se mettre en prise avec la seconde surface intérieure du second élément amortisseur (340) le long d'un quatrième arc hélicoïdal sous-tendant un angle d'au moins 90°.

12. Système selon la revendication 11, comprenant en outre une première terminaison (350) qui couple une première extrémité du premier ressort (310) à une seconde extrémité du second ressort (320).

13. Système selon la revendication 12, dans lequel la première terminaison (350) inclut une première rainure hélicoïdale sur une surface extérieure (332) qui se met en prise avec au moins une spire hélicoïdale du premier ressort (310) et une seconde rainure hélicoïdale sur une surface intérieure (334) qui se met en prise avec au moins une spire hélicoïdale du second ressort (320).

14. Système selon la revendication 11, dans lequel le premier ressort (310) inclut une première fréquence de résonance et le second ressort (320) inclut une seconde fréquence de résonance, et la première fréquence de résonance et la seconde fréquence de résonance sont des fréquences de résonance dissemblables.

15. Système selon la revendication 11, dans lequel le premier ressort (310) inclut une première constante de rappel et le second ressort (320) inclut une seconde constante de rappel et la première constante de rappel et la seconde constante de rappel sont des constantes de rappel dissemblables.
